# EUROPEAN PATENT APPLICATION

(11) **EP 4 498 455 A2**
(43) Date of publication of application: **29.01.2025**
(21) Application number: 24182956.3
(22) Date of filing: 18.06.2024
(51) Int. Cl.: H01M 4/62, H01M 10/0525, H01M 4/02

(54) **POSITIVE ELECTRODE MATERIAL FOR LITHIUM-ION BATTERIES**

(30) Priority: 28.06.2023 CN 202310781058
(71) Applicant: Techtronic Cordless GP, Anderson, SC 29621 (US)
(72) Inventor: WU, Zong Jian, Dongguan City (CN); WANG, Xi Qing, Dongguan City (CN)
(74) Representative: Novagraaf Group

(57) **Abstract**

The present invention provides a positive electrode material for lithium-ion batteries. The positive electrode material for lithium-ion batteries comprises a polymer additive as shown in Formula I or II, the polymer additive has an average molecular weight of 10,000 to 1,000,000, preferably 100,000 to 500,000, and more preferably 300,000, and an addition amount of the polymer additive is 0.001 wt% to 0.1 wt%, preferably 0.01 wt%. By adding the polymer additive as shown in Formula I or II, lithium carbonate in the positive electrode material is better dispersed, a CID is turned on faster, and the lithium-ion batteries thus have better protection against overcharge.

## Description

### Technical Field

The present invention relates to the technical field of lithium-ion batteries, and in particular to a positive electrode material for lithium-ion batteries.

### Background Art

Generally, a lithium-ion battery includes an electrode assembly, a housing for accommodating the electrode assembly, and an electrolyte injected into the housing to allow lithium-ions to migrate. The electrode assembly includes a positive electrode coated with a positive electrode material, a negative electrode coated with a negative electrode material, and a separator disposed between the positive electrode and the negative electrode to prevent short circuit and allow lithium-ions to migrate. Among them, the positive electrode material of the lithium-ion battery is a key factor in determining the electrochemical performance, safety performance, energy density, and price cost of the battery. At present, there are many kinds of positive electrode materials for lithium-ion batteries, such as cobalt-based positive electrode materials, nickel-based positive electrode materials, manganese-based positive electrode materials, lithium iron phosphate positive electrode materials, etc.

Overcharge of a lithium-ion battery will not only cause irreversible damage to the battery, but also may cause serious safety problems such as combustion and explosion. In this regard, a current interrupt device (CID) is usually equipped in the battery. When the battery is overcharged, the pressure inside the battery will increase. When the pressure increases to a certain extent, the CID will be turned on to interrupt the current, preventing the battery from being further overcharged, and thereby avoiding more serious safety problems.

In order to make the CID more sensitive to monitor the charging state of the lithium-ion battery and improve the overcharge resistance of the lithium-ion battery, lithium carbonate is usually added to the positive electrode material in the prior art. When the battery is overcharged, lithium carbonate will decompose and produce carbon dioxide gas to increase the pressure inside the battery to achieve the effect of turning on the CID. The dispersion of lithium carbonate in the positive electrode material has a certain influence on the turning-on of CID. The better the dispersion of lithium carbonate, the faster the CID will be turned on, which can more effectively avoid the safety problems caused by overcharge of the lithium-ion battery.

### Summary of the Invention

An object of the present invention is to provide a positive electrode material for lithium-ion batteries. The positive electrode material for lithium-ion batteries comprises a polymer additive as shown in Formula I or II. By adding the polymer additive as shown in Formula I or II, lithium carbonate in the positive electrode material is better dispersed, the CID is turned on faster, and the lithium-ion batteries thus have better protection against overcharge.

According to an aspect of the present invention, a positive electrode material for lithium-ion batteries is provided. The positive electrode material comprises lithium carbonate and a polymer additive as shown in Formula I or II: 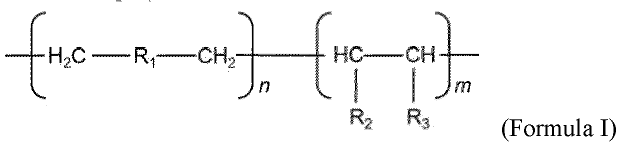 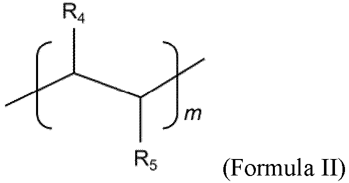 where R₁, R₂, R₃, R₄, and R₅ are independently selected from one or more of a hydrogen atom, a halogen atom, a carboxyl group, a hydroxyl group, a cyano group, an isothiocyanato group, an ester group, an amide group, an amino group, a substituted or unsubstituted alkyl group, a substituted or unsubstituted alkenyl group, and a substituted or unsubstituted aryl group; *n* is an integer from 1 to 4210, and *m* is an integer from 1 to 35710.

In an embodiment, the polymer additive has an average molecular weight of 10,000 to 1,000,000, preferably 100,000 to 500,000, and more preferably 300,000.

In an embodiment, the polymer additive is selected from one or more of NBR, HNBR, SBR, PVP and PAA, preferably one or more of NBR, HNBR and PVP, and more preferably NBR.

In an embodiment, an addition amount of the polymer additive in the positive electrode material for lithium-ion batteries is 0.001 wt% to 0.1 wt%, preferably 0.01 wt%.

In an embodiment, the positive electrode material comprises 0.3 wt% to 1.0 wt% of lithium carbonate.

In an embodiment, the positive electrode material comprises 90 wt% to 99 wt% of a positive electrode active material.

In an embodiment, the positive electrode active material is selected from one or more of lithium nickel cobalt manganese oxide, lithium manganese oxide, lithium cobalt oxide, lithium nickel oxide, lithium nickel cobalt aluminum oxide and lithium iron phosphate.

In an embodiment, the positive electrode material further comprises 0.1 wt% to 10 wt% of a binder.

In an embodiment, the binder is selected from one or more of polyvinylidene fluoride, carboxymethyl cellulose and styrene-butadiene rubber.

In an embodiment, the positive electrode material further comprises 0.1 wt% to 10 wt% of a conductive agent.

In an embodiment, the conductive agent is selected from one or more of conductive carbon black, superconducting carbon black, carbon nanotubes, carbon fibers and graphite conductive agents.

According to another aspect of the present invention, a positive electrode plate for lithium-ion batteries is provided. The positive electrode plate comprises the positive electrode material for lithium-ion batteries as described above.

In an embodiment, lithium carbonate particles have a BET surface area of 20.2 m²/g to 23.8 m²/g, preferably 23.2 m²/g.

In an embodiment, a size of an agglomeration of the lithium carbonate particles is less than 100 µm.

In an embodiment, the number of agglomerations of the lithium carbonate particles is not more than 2.

In an embodiment, the agglomeration of the lithium carbonate has a density of no more than 0.08 particles/square centimeter.

In an embodiment, there is no agglomeration of lithium carbonate particles in the positive electrode plate for lithium-ion batteries.

According to still another aspect of the present invention, a lithium-ion battery is provided. The lithium-ion battery comprises the positive electrode plate for lithium-ion batteries as described above.

### Brief Description of the Drawings

FIG. 1 shows overcharge test results of No. 1, No.3 and No.5 batteries;
FIG. 2 shows CCD test results of No. 1 to No.5 positive electrode plates;
FIG. 3 shows overcharge test results of No. 6, No.8 and No. 10 batteries;
FIG. 4 shows CCD test results of No. 6 to No. 10 positive electrode plates;
FIG. 5 shows an enlarged view of a local area of the No.5 positive electrode plate;
FIG. 6 shows an enlarged view of a local area of the No.6 positive electrode plate;
FIG. 7 shows an enlarged view of a local area of the No.8 positive electrode plate;
FIG. 8 shows overcharge test results of No. 1, No. 11 and No. 14 batteries; and
FIG. 9 shows CCD test results of No. 1 1 to No. 15 positive electrode plates;

### Detailed Description of Embodiments

Specific embodiments of the present invention are now described in detail with reference to the drawings. The embodiments described here are merely preferred embodiments according to the present invention. A person skilled in the art could conceive of other ways of implementing the present invention on the basis of the preferred embodiments, and such other ways shall likewise fall within the scope of the present invention. In some embodiments, in order to avoid confusion with the present invention, some technical features that are well known in the art are not described.

### Definitions

Unless otherwise defined, all technical and scientific terms used in the present invention have the same meanings as commonly understood by a person of ordinary skill in the art. In case of conflict, the present invention (including definitions) shall prevail. Only exemplary methods and materials will be described below. Methods and materials similar or equivalent to those described in the present invention can all be used in the experiments or tests of the present invention. The materials, methods, and examples disclosed in the present invention are illustrative only and not intended to be limiting.

Regarding the description of numerical ranges in the present invention, it is expressly anticipated that these ranges include every intermediate number with the same degree of precision. For example, for the range of 6 to 9, the numbers 7 and 8 are considered in addition to 6 and 9, and for the range of 6.0 to 7.0, the numbers 6.0, 6.1, 6.2, 6.3, 6.4, 6.5, 6.6, 6.7, 6.8, 6.9 and 7.0 are expressly anticipated.

### Lithium-ion battery

An exemplary lithium-ion battery includes a housing and a positive electrode, a negative electrode, a separator and an electrolyte accommodated in the housing.

### I. Positive electrode

An exemplary positive electrode may include a positive electrode material and a positive electrode current collector. An exemplary positive electrode material may include a positive electrode active material, a binder, a conductive agent and lithium carbonate. The positive electrode material is formed on the surface of the positive electrode current collector. The positive electrode material may be formed only on one side of the positive electrode current collector or on front and back sides of the positive electrode current collector. The positive electrode material may have a thickness of 10 µm to 200 µm, for example. An exemplary positive electrode current collector is aluminum foil.

### A. Positive electrode active material

There is no particular limitation on the positive electrode active material. An exemplary positive electrode active material is selected from one or more of lithium nickel cobalt manganese oxide, lithium manganese oxide, lithium cobalt oxide, lithium nickel oxide, lithium nickel cobalt aluminum oxide and lithium iron phosphate. Preferably, the positive electrode active material is LiNi_{0.8}Co_{0.1}Mn_{0.1}O₂.

An exemplary positive electrode material may include 90 wt% to 99 wt% of the positive electrode active material. In various cases, an exemplary positive electrode material may include 90 wt% to 99 wt% of the positive electrode active materials, 91 wt% to 98 wt% of the positive electrode active material, 92 wt% to 97 wt% of the positive electrode active material, 93 wt% to 96 wt% of the positive electrode active material, or 94 wt% to 95 wt% of the positive electrode active material. In various cases, an exemplary positive electrode material may include no more than 99 wt% of the positive electrode active material, no more than 98 wt% of the positive electrode active material, no more than 97 wt% of the positive electrode active material, no more than 96 wt% of the positive electrode active material, no more than 95 wt% of the positive electrode active material, no more than 94 wt% of the positive electrode active material, no more than 93 wt% of the positive electrode active material, no more than 92 wt% of the positive electrode active material, no more than 91 wt% of the positive electrode active material, or no more than 90 wt% of the positive electrode active material. In various cases, an exemplary positive electrode material may include not less than 90 wt% of the positive electrode active material, not less than 91 wt% of the positive electrode active material, not less than 92 wt% of the positive electrode active material, not less than 93 wt% of the positive electrode active material, not less than 94 wt% of the positive electrode active material, not less than 95 wt% of the positive electrode active material, not less than 96 wt% of the positive electrode active material, not less than 97 wt% of the positive electrode active material, not less than 98 wt% of the positive electrode active material, or not less than 99 wt% of the positive electrode active material. The exemplary positive electrode material may also be substantially composed only of the positive electrode active material.

### B. Binder

An exemplary binder is selected from one or more of polyvinylidene fluoride, carboxymethyl cellulose, styrene-butadiene rubber, polybenzimidazole, polyimide, polyvinyl acetate, polyacrylonitrile, polyvinyl alcohol, starch, hydroxypropyl methylcellulose, regenerated cellulose, polyvinyl pyrrolidone, polyethylene, polypropylene, polystyrene, polymethyl methacrylate, polyaniline, acrylonitrile-butadiene-styrene copolymer, phenolic resin, epoxy resin, polyethylene terephthalate, polytetrafluoroethylene, polyphenylene sulfide, polyamide-imide, polyetherimide, polyethylene sulfone, polyacetal, polyphenylene ether, polybutylene terephthalate, ethylene-propylene-diene terpolymer, sulfonated ethylene-propylene-diene terpolymer, fluorocarbon rubber and various copolymers. Preferably, the binder is selected from one or more of polyvinylidene fluoride, carboxymethyl cellulose and styrene-butadiene rubber. As a preferred, non-limiting example, the binder is polyvinylidene fluoride.

An exemplary positive electrode material may include 0.1wt% to 10wt% of the binder. In various cases, an exemplary positive electrode material may include 0.1 wt% to 10 wt% of the binder, 0.5 wt% to 9.5 wt% of the binder, 1 wt% to 9 wt% of the binder, 3 wt% to 7 wt% of the binder, or 4 wt% to 6 wt% of the binder. In various cases, an exemplary positive electrode material may include no more than 10 wt% of the binder, no more than 9 wt% of the binder, no more than 8 wt% of the binder, no more than 7 wt% of the binder, no more than 6 wt% of the binder, no more than 5 wt% of the binder, no more than 4 wt% of the binder, no more than 3 wt% of the binder, no more than 2 wt% of the binder, no more than 1 wt% of the binder, no more than 0.5 wt% of the binder, or no more than 0.1 wt% of the binder. In various cases, the exemplary positive electrode material may include not less than 0.1 wt% of the binder, not less than 0.5 wt% of the binder, not less than 1 wt% of the binder, not less than 2 wt% of the binder, not less than 3 wt% of the binder, not less than 4 wt% of the binder, not less than 5 wt% of the binder, not less than 6 wt% of the binder, not less than 7 wt% of the binder, not less than 8 wt% of the binder, not less than 9 wt% of the binder, or not less than 10 wt% of the binder.

### C. Conductive agent

The exemplary conductive agent is selected from one or more of conductive carbon black, superconducting carbon black, carbon nanotube, carbon fibers, and graphite-based conductive agents. Preferably, the conductive agent is selected from conductive carbon black or superconducting carbon black. More preferably, the conductive agent is superconducting carbon black.

An exemplary positive electrode material may include 0.1wt% to 10wt% of the conductive agent. In various cases, an exemplary positive electrode material may include 0.1 wt% to 10 wt% of the conductive agent, 0.5 wt% to 9.5 wt% of the conductive agent, 1 wt% to 9 wt% of the conductive agent, 3 wt% to 7 wt% of the conductive agent, or 4 wt% to 6 wt% of the conductive agent. In various cases, an exemplary positive electrode material may include no more than 10 wt% of the conductive agent, no more than 9 wt% of the conductive agent, no more than 8 wt% of the conductive agent, no more than 7 wt% of the conductive agent, no more than 6 wt% of the conductive agent, no more than 5 wt% of the conductive agent, no more than 4 wt% of the conductive agent, no more than 3 wt% of the conductive agent, no more than 2 wt% of the conductive agent, no more than 1 wt% of the conductive agent, no more than 0.5 wt% of the conductive agent, or no more than 0.1 wt% of the conductive agent. In various cases, an exemplary positive electrode material may include not less than 0.1 wt% of the conductive agent, not less than 0.5 wt% of the conductive agent, not less than 1 wt% of the conductive agent, not less than 2 wt% of the conductive agent, not less than 3 wt% of the conductive agent, not less than 4 wt% of the conductive agent, not less than 5 wt% of the conductive agent, not less than 6 wt% of the conductive agent, not less than 7 wt% of the conductive agent, not less than 8 wt% of the conductive agent, not less than 9 wt% of the conductive agent, or not less than 10 wt% of the conductive agent.

### D. Lithium carbonate

In order to prevent the battery from being overcharged, an appropriate amount of lithium carbonate is added to the positive electrode material. In order to achieve a better dispersion effect, lithium carbonate is added in the form of a lithium carbonate suspension, and the addition amount of lithium carbonate suspension is based on the ability to turn on the CID when the battery is overcharged.

An exemplary positive electrode material may include 0.3 wt% to 1.0 wt% of lithium carbonate. In various cases, an exemplary cathode material may include 0.3 wt% to 1.0 wt% lithium carbonate, 0.4 wt% to 0.9 wt% lithium carbonate, 0.5 wt% to 0.8 wt% lithium carbonate, or 0.6 wt% to 0.7 wt% lithium carbonate. In various cases, an exemplary cathode material may include no more than 1.0 wt% lithium carbonate, no more than 0.9 wt% lithium carbonate, no more than 0.8 wt% lithium carbonate, no more than 0.7 wt% lithium carbonate, no more than 0.6 wt% lithium carbonate, no more than 0.5 wt% lithium carbonate, no more than 0.4 wt% lithium carbonate, or no more than 0.3 wt% lithium carbonate. In various cases, an exemplary positive electrode material may include not less than 0.3 wt% lithium carbonate, not less than 0.4 wt% lithium carbonate, not less than 0.5 wt% lithium carbonate, not less than 0.6 wt% lithium carbonate, not less than 0.7 wt% lithium carbonate, not less than 0.8 wt% lithium carbonate, not less than 0.9 wt% lithium carbonate, or not less than 1.0 wt% lithium carbonate.

### E. Preparation method of lithium carbonate suspension

As a preferred embodiment, a method for preparing the lithium carbonate suspension includes the following steps:
step 1, mixing lithium carbonate powder, a grinding medium, and a dispersion medium, and then grinding and filtering to obtain a lithium carbonate suspension; and
step 2, adding a polymer additive to the lithium carbonate suspension, stirring and dispersing to obtain a stable lithium carbonate suspension.

The lithium carbonate suspension obtained by the present invention shows better stability after the polymer additive is added. That is, lithium carbonate is better dispersed in the suspension and maintained for a longer time.

As a preferred embodiment, the polymer additive is as shown in Formula I or II: 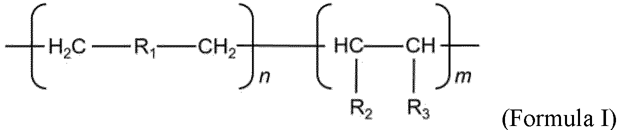 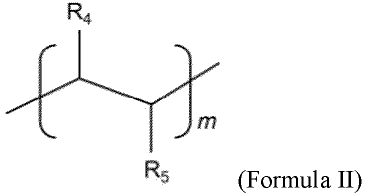 where R₁, R₂, R₃, R₄, and R₅ are independently selected from one or more of a hydrogen atom, a halogen atom, a carboxyl group, a hydroxyl group, a cyano group, an isothiocyanato group, an ester group, an amide group, an amino group, a substituted or unsubstituted alkyl group, a substituted or unsubstituted alkenyl group, and a substituted or unsubstituted aryl group; *n* is an integer from 1 to 4210, and *m* is an integer from 1 to 35710.

As a preferred embodiment, the additive of Formula I may be selected from the following polymers: nitrile rubber (NBR) 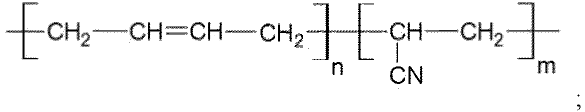 hydrogenated nitrile rubber (HNBR) 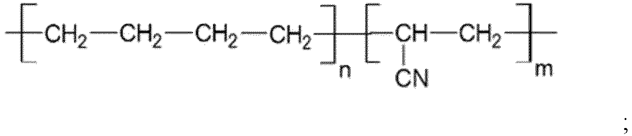 polymerized styrene butadiene rubber (SBR) 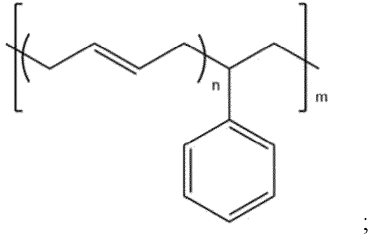 where *n* is an integer from 1 to 4210, and *m* is an integer from 1 to 35710.

As a preferred embodiment, the additive of Formula II may be selected from the following polymers: polyvinyl pyrrolidone (PVP) 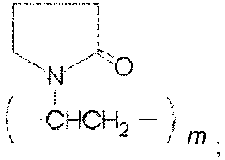 polyacrylic acid (PAA) 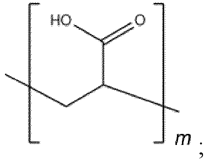 where *m* is an integer from 1 to 35710.

An exemplary lithium carbonate suspension may include 0.1 wt% to 10 wt%, preferably 1 wt%, of the polymer additive shown in Formula I or II. In various cases, an exemplary positive electrode material may include 0.1 wt% to 10 wt% of the polymer additive shown in Formula I or II, 0.3 wt% to 8 wt% of the polymer additive shown in Formula I or II, 0.5 wt% to 6 wt% of the polymer additive shown in Formula I or II, 0.7 wt% to 4 wt% of the polymer additive shown in Formula I or II, 0.9 wt% to 2 wt% of the polymer additive shown in Formula I or II, or 1 wt% of the polymer additive shown in Formula I or II. In various cases, an exemplary positive electrode material may include no more than 10 wt% of the polymer additive shown in Formula I or II, no more than 8 wt% of the polymer additive shown in Formula I or II, no more than 6 wt% of the polymer additive shown in Formula I or II, no more than 4 wt% of the polymer additive shown in Formula I or II, no more than 2 wt% of the polymer additive shown in Formula I or II, no more than 1 wt% of the polymer additive shown in Formula I or II, no more than 0.5 wt% of the polymer additive shown in Formula I or II, or no more than 0.1 wt% of the polymer additive shown in Formula I or II. In various cases, an exemplary positive electrode material may include not less than 0.1 wt% of the polymer additive shown in Formula I or II, not less than 0.5 wt% of the polymer additive shown in Formula I or II, not less than 1 wt% of the polymer additive shown in Formula I or II, not less than 2 wt% of the polymer additive shown in Formula I or II, not less than 4 wt% of the polymer additive shown in Formula I or II, not less than 6 wt% of the polymer additive shown in Formula I or II, not less than 8 wt% of the polymer additive shown in Formula I or II, or not less than 10 wt% of the polymer additive shown in Formula I or II.

In order to achieve a better dispersion effect of lithium carbonate in the suspension, as a further preferred embodiment, the average molecular weight of the polymer additive is 10,000 to 1,000,000, preferably 100,000 to 500,000, and more preferably 300,000.

As a further preferred embodiment, the stable lithium carbonate suspension is dried to obtain lithium carbonate particles, and the BET surface area of the lithium carbonate particles is 20.2 m²/g to 23.8 m²/g, preferably 23.2 m²/g.

As a further preferred embodiment, step 1 includes a first process and a second process, wherein the first process includes mixing lithium carbonate powder, a grinding medium, and a first dispersion medium, and then grinding to obtain a first suspension; and the second process includes mixing the first suspension, a grinding medium, and a second dispersion medium, and then grinding to obtain a lithium carbonate suspension.

An exemplary first dispersion medium and an exemplary second dispersion medium may each be selected from one or more of methanol, ethanol, propanol or N-methyl-2-pyrrolidone. An exemplary grinding medium may be selected from one or more of aluminum oxide particles, zirconium oxide particles or zirconium silicate particles.

The present invention further provides a stable lithium carbonate suspension. The stable lithium carbonate suspension contains the polymer additive as shown in Formula I or II. The stable lithium carbonate suspension may be prepared by the preparation method as described above.

The present invention further provides a method for preparing a positive electrode material for lithium-ion batteries, including the following steps: adding the stable lithium carbonate suspension described in the present invention to a positive electrode slurry containing a positive electrode active material, a binder, and a conductive agent.

The present invention further provides a positive electrode material for lithium-ion batteries. The positive electrode material contains the polymer additive as shown in Formula I or II. The positive electrode material may be prepared by the preparation method as described above.

An exemplary positive electrode material may include 0.001 wt% to 0.1 wt%, preferably 0.01 wt%, of the polymer additive shown in Formula I or II. In various cases, an exemplary positive electrode material may include 0.001 wt% to 0.1 wt% of the polymer additive shown in Formula I or II, 0.003 wt% to 0.08 wt% of the polymer additive shown in Formula I or II, 0.005 wt% to 0.06 wt% of the polymer additive shown in Formula I or II, 0.007 wt% to 0.04 wt% of the polymer additive shown in Formula I or II, 0.009 wt% to 0.02 wt% of the polymer additive shown in Formula I or II, or 0.01 wt% of the polymer additive shown in Formula I or II. In various cases, an exemplary positive electrode material may include no more than 0.1 wt% of the polymer additive shown in Formula I or II, no more than 0.08 wt% of the polymer additive shown in Formula I or II, no more than 0.06 wt% of the polymer additive shown in Formula I or II, no more than 0.04 wt% of the polymer additive shown in Formula I or II, no more than 0.02 wt% of the polymer additive shown in Formula I or II, no more than 0.01 wt% of the polymer additive shown in Formula I or II, no more than 0.009 wt% of the polymer additive shown in Formula I or II, no more than 0.007 wt% of the polymer additive shown in Formula I or II, no more than 0.005 wt% of the polymer additive shown in Formula I or II, no more than 0.003 wt% of the polymer additive shown in Formula I or II, or no more than 0.001 wt% of the polymer additive shown in Formula I or II. In various cases, the exemplary positive electrode material may include not less than 0.001 wt% of the polymer additive shown in Formula I or II, not less than 0.003 wt% of the polymer additive shown in Formula I or II, not less than 0.005 wt% of the polymer additive shown in Formula I or II, not less than 0.007 wt% of the polymer additive shown in Formula I or II, not less than 0.009 wt% of the polymer additive shown in Formula I or II, not less than 0.01 wt% of the polymer additive shown in Formula I or II, not less than 0.02 wt% of the polymer additive shown in Formula I or II, not less than 0.04 wt% of the polymer additive shown in Formula I or II, not less than 0.06 wt% of the polymer additive shown in Formula I or II, not less than 0.08 wt% of the polymer additive shown in Formula I or II, or not less than 0.1 wt% of the polymer additive shown in Formula I or II.

An exemplary positive electrode may be prepared by coating a positive electrode slurry including a positive electrode material (which may include a positive electrode active material, a binder, a conductive agent, and lithium carbonate) onto a positive electrode current collector and drying the slurry. The positive electrode material may be further compacted onto the current collector by using a pressing method known to a person of ordinary skill in the art. An exemplary positive electrode slurry may be prepared by combining positive electrode material components (a positive electrode active material, a binder and a conductive agent), mixing uniformly by adding a suitable solvent (e.g., N-methylpyrrolidone), and further adding the stable lithium carbonate suspension of the present invention.

### II. Negative electrode

An exemplary negative electrode may generally include a negative electrode material and a negative electrode current collector. An exemplary negative electrode material may include a negative electrode active material, a binder, and a conductive agent. The negative electrode material is formed on the surface of the negative electrode current collector. The negative electrode material may be formed only on one side of the negative electrode current collector, or may be formed on front and back sides of the negative electrode current collector. The negative electrode material may have a thickness of 10 µm to 200 µm, for example. There is no particular limitation on the negative electrode active material, and it may include carbon, such as natural or artificial graphite. In various cases, an exemplary negative electrode active material may be a carbon composite material, such as a silicon-carbon composite material (Si/C). An exemplary negative electrode current collector is copper foil.

An exemplary negative electrode material may include 90 wt% to 99 wt% of the negative electrode active material. In various cases, an exemplary negative electrode material may include 90 wt% to 99 wt% of the negative electrode active material, 91 wt% to 98 wt% of the negative electrode active material, 92 wt% to 97 wt% of the negative electrode active material, 93 wt% to 96 wt% of the negative electrode active material, or 94 wt% to 95 wt% of the negative electrode active material. In various cases, an exemplary negative electrode material may include no more than 99 wt% of the negative electrode active material, no more than 98 wt% of the negative electrode active material, no more than 97 wt% of the negative electrode active material, no more than 96 wt% of the negative electrode active material, no more than 95 wt% of the negative electrode active material, no more than 94 wt% of the negative electrode active material, no more than 93 wt% of the negative electrode active material, no more than 92 wt% of the negative electrode active material, no more than 91 wt% of the negative electrode active material, or no more than 90 wt% of the negative electrode active material. In various cases, an exemplary negative electrode material may include not less than 90 wt% of the negative electrode active material, not less than 91 wt% of the negative electrode active material, not less than 92 wt% of the negative electrode active material, not less than 93 wt% of the negative electrode active material, not less than 94 wt% of the negative electrode active material, not less than 95 wt% of the negative electrode active material, not less than 96 wt% of the negative electrode active material, not less than 97 wt% of the negative electrode active material, not less than 98 wt% of the negative electrode active material, or not less than 99 wt% of the negative electrode active material. An exemplary negative electrode material may also be substantially composed of only the negative electrode active material.

An exemplary negative electrode may be prepared by coating a negative electrode slurry including negative electrode material components (which may include a negative electrode active material, a binder, and a conductive agent) onto a negative electrode current collector and drying the slurry. The negative electrode material may be further compacted onto the current collector by using a pressing method known to a person of ordinary skill in the art. An exemplary negative electrode slurry may be prepared by combining negative electrode material components (a negative electrode active material, a binder, and a conductive agent) and adding a suitable solvent (e.g., deionized water).

In addition, a binder and/or a conductive agent may be optionally included in the negative electrode material and may be the same (or substantially the same) as those described for the positive electrode material, and will be not described again in the present invention.

### III. Separator

The lithium-ion battery described in the present invention has no particular limitation on the separator. An exemplary separator is a separator made of a polymer such as polypropylene (PP) or polyethylene (PE).

### IV. Electrolyte

The lithium-ion battery described in the present invention has no particular limitation on the electrolyte. For example, it is a non-aqueous electrolyte, and an exemplary non-aqueous electrolyte includes one or more lithium (Li) salts and a non-aqueous solvent. For example, it is an organic electrolyte, and the organic electrolyte is prepared by dissolving a lithium salt in an organic solvent. The lithium salt may be any lithium salt commonly used in the art. An exemplary lithium salt is LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiCl, LiI, LiN(CₓF₂ₓ+1SO₂)(C_{y}F_{2y}+1SO₂) (where x and y are natural numbers) or any mixture thereof. The organic solvent may be any suitable material that can be used as an organic solvent. An exemplary organic solvent is ethylene carbonate, ethyl vinyl carbonate, propylene carbonate, ethylene carbonate, fluoroethylene carbonate, butylene carbonate, dimethyl carbonate, diethyl carbonate, ethyl methyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a combination thereof.

In addition to the above-mentioned organic electrolytes, other exemplary electrolytes further include organic solid electrolytes, inorganic solid electrolytes, etc. Examples of the organic solid electrolytes include polyethylene derivatives, polyethylene oxide derivatives, polypropylene oxide derivatives, phosphate polymers, polyester sulfides, polyvinyl alcohol, PVDF, and polymers including ion dissociation groups. Examples of the inorganic solid electrolytes are nitride solid electrolytes, oxynitride solid electrolytes, and sulfide solid electrolytes. Examples of the inorganic solid electrolytes are Li₃N, LiI, Li₅NI₂, Li₃N-LiI-LiOH, Li₂SiS₃, Li₄SiO₄, Li₄SiO₄-LiI-LiOH, and Li₃PO₄-Li₂S-SiS₂.

Exemplary lithium-ion batteries may be prepared by using methods known to a person of ordinary skill in the art.

### Specific examples

The following examples describe several implementations of the present invention, which provide a description of the present invention and are not intended to limit the present invention thereto.

### Example 1: Preparation of stable lithium carbonate suspension

Step 1: Prepare a lithium carbonate suspension by two-stage sand milling: a first stage (first process) includes mixing lithium carbonate powder, a grinding medium, and a first dispersion medium in a first sand mill, and then grinding to obtain a first suspension; and a second stage (second process) includes mixing the first suspension, a grinding medium, and a second dispersion medium in a second sand mill, and then grinding to obtain a lithium carbonate suspension.

Step 2: Add the polymer additive as shown in Formula I or II to the lithium carbonate suspension, and stir and disperse to obtain a stable lithium carbonate suspension.

### Example 2: BET surface area test of lithium carbonate particles

The stable lithium carbonate suspension prepared by Example 1 is dried to obtain lithium carbonate particles, and the BET surface area of lithium carbonate particles is further determined by using a nitrogen low-temperature adsorption method: heating and vacuuming a sample for degassing to remove impurity gases adsorbed on the surface; weighing, placing in liquid nitrogen, and measuring nitrogen adsorption amounts of the sample at different preset pressure points at liquid nitrogen temperature to obtain an adsorption isotherm; and processing data by computer, and calculating the BET surface area according to the adsorption isotherm.

The effects of the addition amount of additives, the type of additives, and the average molecular weight of additives on the BET surface area of lithium carbonate particles will be separately investigated below.

### (1) Effect of the addition amount of additives on the BET surface area of lithium carbonate particles

By adjusting the addition amount of an additive (the additive is NBR, with an average molecular weight of 300,000), the BET surface area of lithium carbonate particles was tested, and the results are shown in Table 1.

**Table 1 Effect of the addition amount of the additive on the BET surface area of lithium carbonate particles**

| Addition amount (wt%) | BET surface area (m²/g) |
|---|---|
| 0 | 24.1 |
| 0.001 | 24.3 |
| 0.01 | 23.6 |
| 0.1 | 23.8 |
| 1 | 23.2 |
| 10 | 21.4 |
| 20 | 20.8 |
| 30 | 13.9 |

### (2) Effect of the average molecular weight of additives on the BET surface area of lithium carbonate particles

By adjusting the average molecular weight of an additive (the additives are NBR, with an addition amount of 1 wt%), the BET surface area of lithium carbonate particles was tested, and the results are shown in Table 2.

**Table 2 Effect of the average molecular weight of the additive on the BET surface area of lithium carbonate particles**

| Average molecular weight | BET surface area (m²/g) |
|---|---|
| 10,000 | 20.8 |
| 100,000 | 23.8 |
| 300,000 | 23.2 |
| 500,000 | 21.2 |
| 700,000 | 18.9 |
| 1,000,000 | 14.2 |

### (3) Effect of the type of additives on the BET surface area of lithium carbonate particles

By adjusting the type of additives (with an addition amount of 1%), the BET surface area of lithium carbonate particles was tested, and the results are shown in Table 3.

**Table 3 Effect of the type of the additives on the BET surface area of lithium carbonate particles**

| Additive | Average molecular weight | BET surface area (m²/g) |
|---|---|---|
| NBR | 300,000 | 23.2 |
| HNBR | 180,000 | 23.8 |
| SBR | 500,000 | 21.7 |
| PVP | 360,000 | 20.2 |
| PAA | 450,000 | 20.7 |

### Example 3: Battery overcharge test and CCD test

Lithium-ion battery used for overcharge test: the positive electrode active material is LiNi_{0.8}Co_{0.1}Mn_{0.1}O₂, the negative electrode active material is a silicon-carbon composite material, and the electrolyte is an organic electrolyte.

The stable lithium carbonate suspension prepared by Example 1 was added to the slurry of the positive electrode material, and the effects of the addition amount of an additive, the type of an additive, and the average molecular weight of an additive on battery overcharge were separately investigated. Battery overcharge test conditions: 8A-6V (100% SOC).

### (1) Effect of the addition amount of an additive on battery overcharge

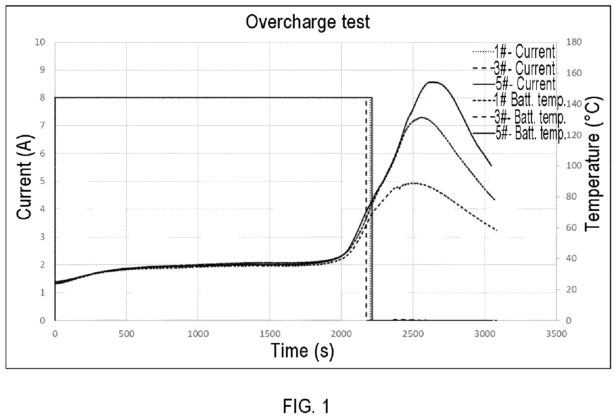

By adjusting the addition amount of an additive (the additive is NBR, with an average molecular weight of 300,000), an overcharge test was carried out on batteries and the results are shown in Table 4 and FIG. 1 (No. 1 is without additives, as a comparative example). Batteries with the addition amounts of 0.1 wt%, 1 wt% and 10 wt% have shorter CID turning-on time and much lower maximum battery temperature than those without additives and with the additive amount of 30 wt%. The battery with the addition amount of 1 wt% has the shortest CID turning-on time and the lowest maximum battery temperature.

**Table 4 Effect of the addition amount of the additive on battery overcharge**

| No. | Addition amount (wt%) | BET surface area (m²/g) | CID turning-on time (s) | Maximum temperature (°C) |
|---|---|---|---|---|
| 1 | 0 | 24.1 | 2,202 | 131 |
| 2 | 0.1 | 23.8 | 2,182 | 104 |
| 3 | 1 | 23.2 | 2,174 | 87 |
| 4 | 10 | 21.4 | 2,179 | 98 |
| 5 | 30 | 13.9 | 2,214 | 155 |

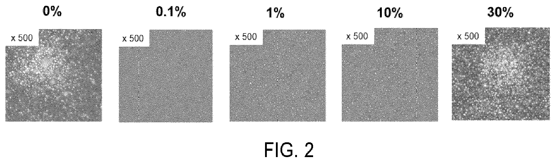

Furthermore, the dispersion effect of lithium carbonate in a positive electrode plate was tested by using a charge coupled device (CCD). As shown in FIG. 2, it can be seen that the dispersion effect of lithium carbonate is better in the electrode plate with the addition amounts of 0.1 wt%, 1 wt% and 10 wt%.

### (2) Effect of the average molecular weight of additives on battery overcharge

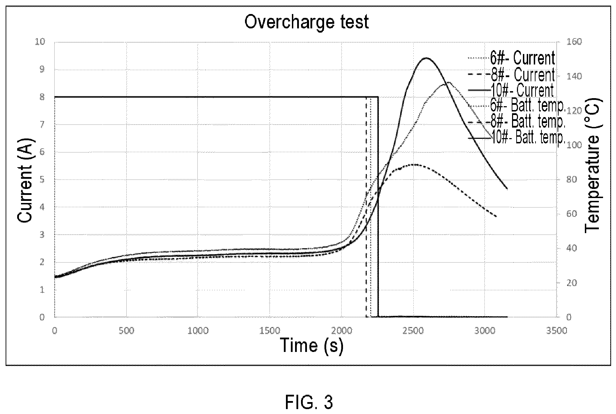

By adjusting the average molecular weight of an additive (the additives are NBR, with an addition amount of 1 wt%), an overcharge test was carried out on batteries, and the results are shown in Table 5 and FIG. 3. The batteries with the additive having the average molecular weights of 100,000, 300,000 and 500,000 have shorter CID turning-on time and much lower maximum battery temperature than those having the average molecular weights of 10,000 and 1,000,000. The battery having the average molecular weight of 300,000 has the shortest CID turning-on time and the lowest maximum temperature. The batteries having the average molecular weights of 100,000 and 300,000 are relatively close in terms of the above-mentioned performance.

**Table 5 Effect of the average molecular weight of the additive on battery overcharge**

| No. | Average molecular weight | BET surface area (m²/g) | CID turning-on time (s) | Maximum temperature (°C) |
|---|---|---|---|---|
| 6 | 10,000 | 20.8 | 2,204 | 136 |
| 7 | 100,000 | 23.8 | 2,177 | 92 |
| 8 | 300,000 | 23.2 | 2,174 | 87 |
| 9 | 500,000 | 21.2 | 2,186 | 113 |
| 10 | 1,000,000 | 14.2 | 2,256 | 156 |

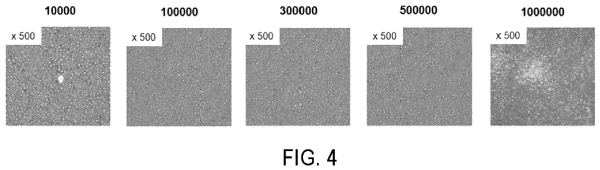

Furthermore, the CCD was used to test the dispersion effect of lithium carbonate in the positive electrode plate. As shown in FIG. 4, it can be seen that the dispersion effect of lithium carbonate in the electrode plate having the average molecular weights of 100000, 300000 and 500000 is better.

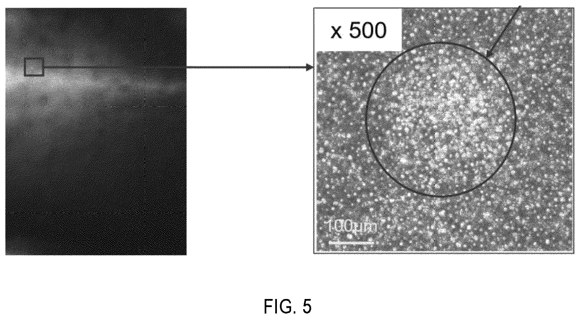

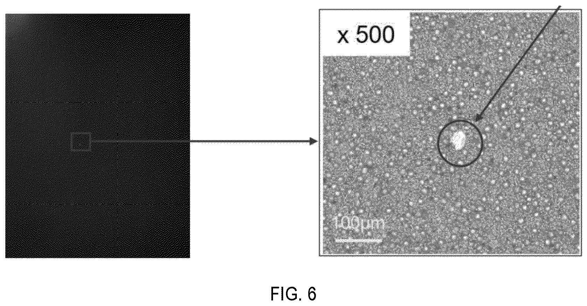

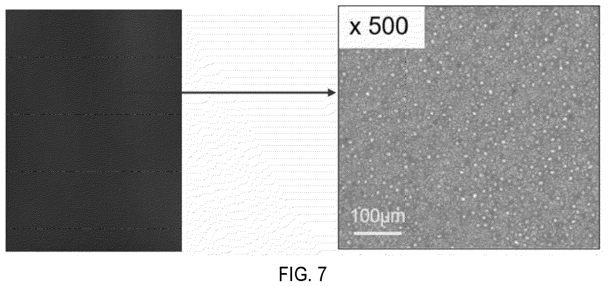

FIGS. 5 to 7 correspond to enlarged views of local areas of electrode plates of Examples Nos. 5, 6, and 8 in sequence, wherein the number of white spots in a 25 cm² electrode plate area is >2 pcs (2 pieces), 1 to 2 pcs, and 0 pcs, in sequence, and the sizes of the white spots are ≥100 µm, 0 to 100 µm, and 0 µm (diameter) in sequence. The white spots are agglomerations of lithium carbonate. In FIG. 5, it can be clearly seen that there is an agglomeration of lithium carbonate in the middle part of the right figure, and the agglomeration may even cover the positive electrode material. In FIG. 6, it can be seen that there is an agglomeration in the right figure. In FIG. 7, it can be seen that there is no agglomeration in the right figure, and the small white dots are positive electrode materials, and their diameter is generally less than 20 um. Therefore, the electrode plates of Nos. 5, 6, and 8 are a bad electrode plate, an acceptable electrode plate, and a preferable electrode plate in sequence. In other words, the density of the agglomeration of lithium carbonate in the acceptable electrode plate is not more than 2 pcs/25 cm²=0.08 pieces/square centimeter, and the size of each agglomeration of lithium carbonate particles is less than 100 µm.

### (3) Effect of the types of additives on battery overcharge

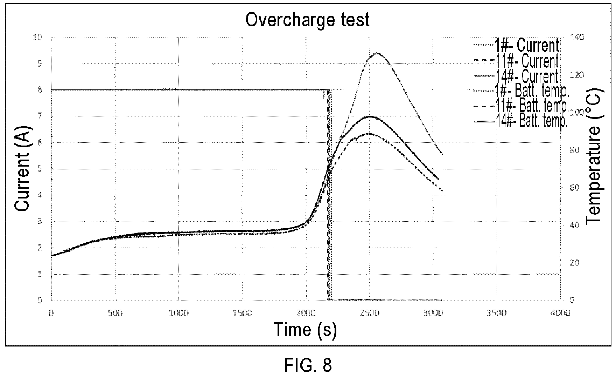

By adjusting the type of additives (with an addition amount of 1 wt%), an overcharge test was carried out on batteries, and the results are shown in Table 6 and FIG. 8. The batteries added with additives have shorter CID turning-on time and much lower maximum battery temperature than the battery without additives. The batteries added with NBR, HNBR and PVP have better performance than the batteries added with SBR and PAA, and the battery with NBR has the best performance.

**Table 6 Effect of the type of additives on battery overcharge**

| No. | Additive | Average molecular weight | BET surface area (m²/g) | CID turning-on time (s) | Maximum temperature (°C) |
|---|---|---|---|---|---|
| 1 | Without addition | / | 24.1 | 2,202 | 131 |
| 11 | NBR | 300,000 | 23.2 | 2,174 | 87 |
| 12 | HNBR | 180,000 | 23.8 | 2,182 | 95 |
| 13 | SBR | 500,000 | 21.7 | 2,193 | 102.9 |
| 14 | PVP | 360,000 | 20.2 | 2,185 | 98 |
| 15 | PAA | 450,000 | 20.7 | 2,199 | 111.5 |

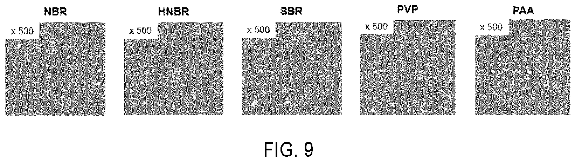

Furthermore, the CCD was used to test the dispersion effect of lithium carbonate in the positive electrode plate. As shown in FIG. 9, it can be seen that the dispersion effect of lithium carbonate in the electrode plates with five additives is good.

It can be seen from the above examples that when the BET surface area is 20.2 m²/g to 23.8 m²/g, the CID turning-on time is shorter, and the maximum temperature of the battery is lower. When the additive is NBR with the average molecular weight of 30,0000 and an addition amount of 1 wt%, the maximum overcharge temperature can be effectively reduced from 131°C to 87°C.

The above description of various embodiments of the present invention is provided to a person of ordinary skill in the relevant art for descriptive purposes. The present invention is not intended to be exclusive or limited to a single disclosed embodiment. Based on the above, a person of ordinary skill in the art as taught above will understand various substitutes for and variants of the present invention. Therefore, although some alternative embodiments have been specifically described, a person of ordinary skill in the art will understand, or develop with relative ease, other embodiments. The present invention is intended to include all substitutes for, alterations to, and variants of the present invention described herein, as well as other embodiments falling within the spirit and scope of the present invention described above.

## Claims

1. A positive electrode material for lithium-ion batteries, **characterized by** comprising lithium carbonate and a polymer additive as shown in Formula I or II: 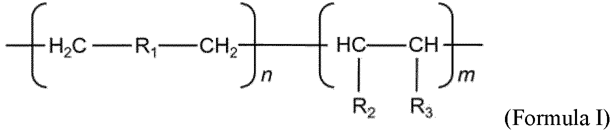 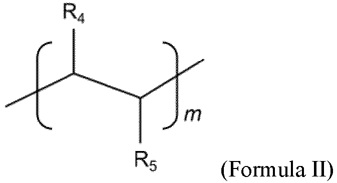 where R₁, R₂, R₃, R₄, and R₅ are independently selected from one or more of a hydrogen atom, a halogen atom, a carboxyl group, a hydroxyl group, a cyano group, an isothiocyanato group, an ester group, an amide group, an amino group, a substituted or unsubstituted alkyl group, a substituted or unsubstituted alkenyl group, and a substituted or unsubstituted aryl group; *n* is an integer from 1 to 4210, and *m* is an integer from 1 to 35710.

2. The positive electrode material for lithium-ion batteries according to claim 1, **characterized in that** the polymer additive has an average molecular weight of 10,000 to 1,000,000, preferably 100,000 to 500,000, and more preferably 300,000.

3. The positive electrode material for lithium-ion batteries according to claim 1, **characterized in that** the polymer additive is selected from one or more of NBR, HNBR, SBR, PVP and PAA, preferably one or more of NBR, HNBR and PVP, and more preferably NBR.

4. The positive electrode material for lithium-ion batteries according to claim 1, **characterized in that** an addition amount of the polymer additive in the positive electrode material for lithium-ion batteries is 0.001 wt% to 0.1 wt%, preferably 0.01 wt%.

5. The positive electrode material for lithium-ion batteries according to claim 1, **characterized in that** the positive electrode material comprises 0.3 wt% to 1.0 wt% of lithium carbonate.

6. The positive electrode material for lithium-ion batteries according to claim 1, **characterized in that** the positive electrode material comprises 90 wt% to 99 wt% of a positive electrode active material; preferably, the positive electrode active material is selected from one or more of lithium nickel cobalt manganese oxide, lithium manganese oxide, lithium cobalt oxide, lithium nickel oxide, lithium nickel cobalt aluminum oxide and lithium iron phosphate.

7. The positive electrode material for lithium-ion batteries according to claim 1, **characterized in that** the positive electrode material further comprises 0.1 wt% to 10 wt% of a binder; preferably, the binder is selected from one or more of polyvinylidene fluoride, carboxymethyl cellulose and styrene-butadiene rubber.

8. The positive electrode material for lithium-ion batteries according to claim 1, **characterized in that** the positive electrode material further comprises 0.1 wt% to 10 wt% of a conductive agent; preferably, the conductive agent is selected from one or more of conductive carbon black, superconducting carbon black, carbon nanotubes, carbon fibers and graphite conductive agents.

9. A positive electrode plate for lithium-ion batteries, **characterized by** comprising the positive electrode material for lithium-ion batteries according to any one of claims 1 to 8.

10. The positive electrode plate for lithium-ion batteries according to claim 9, **characterized in that** lithium carbonate particles have a BET surface area of 20.2 m²/g to 23.8 m²/g, preferably 23.2 m²/g.

11. The positive electrode plate for lithium-ion batteries according to claim 9, **characterized in that** a size of an agglomeration of the lithium carbonate particles is less than 100 µm.

12. The positive electrode plate for lithium-ion batteries according to claim 11, **characterized in that** the number of agglomerations of the lithium carbonate particles is not more than 2.

13. The positive electrode plate for lithium-ion batteries according to claim 11, **characterized in that** the agglomeration of the lithium carbonate has a density of no more than 0.08 particles/square centimeter.

14. The positive electrode plate for lithium-ion batteries according to claim 9, **characterized in that** there is no agglomeration of lithium carbonate particles in the positive electrode plate for lithium-ion batteries.

15. A lithium-ion battery, comprising the positive electrode plate for lithium-ion batteries according to claim 9.
